# EUROPEAN PATENT SPECIFICATION

(11) **EP 1 627 312 B1**
(45) Date of publication and mention of the grant of the patent: **08.08.2007**
(21) Application number: 04732372.0
(22) Date of filing: 12.05.2004
(51) Int. Cl.: G06F 13/38, G06F 13/28

(54) **USB HOST CONTROLLER WITH DMA CAPABILITY**
USB HOST CONTROLLER MIT DMA FÄHIGKEIT
CONTROLEUR D'HOTE AVEC DMA CAPABILITE

(30) Priority: 15.05.2003 WO PCT/SG03/00129
(43) Date of publication of application: 22.02.2006
(73) Proprietor: NXP B.V., 5656 AG Eindhoven (NL)
(72) Inventor: LEE, Chee, E., NL-5656 AA Eindhoven (NL); SOCOL, Constantin, NL-5656 AA Eindhoven (NL); TJIA, Jerome, NL-5656 AA Eindhoven (NL)
(74) Representative: White, Andrew Gordon
(86) International application number: PCT/IB2004/050643
(87) International publication number: WO 2004/102407

(56) References cited:
- US-A- 4 987 529
- US-A1- 2002 178 310
- US-B1- 6 266 715

## Description

This invention relates to a host controller, and in particular to a host controller for use in a bus communications system.

The Universal Serial Bus (USB) specifications define a bus communications system, in which a USB host can be connected to multiple USB devices, in order to allow convenient data transfer between the USB host and the USB devices. The invention relates more specifically to an Enhanced Host Controller Interface (EHCI) that acts as the interface for a host controller in a device which is acting as a USB host.

USB hosts are typically personal computers (PCs) or similar devices. That is, it is mainly PCs which are provided with the functionality to allow them to act as a USB host. This means that a conventional EHCI operates in a situation in which there is a Peripheral Component Interconnect (PCI) standard bus, providing specific functionality, which is used by the EHCI. For example, the EHCI uses the bus mastering functionality of the PCI to retrieve the data that is to be transmitted.

However, it is becoming recognised that it would be useful to allow other devices, for example such as mobile phones, to act as USB hosts. These other devices typically do not have a PCI bus, and so it is not possible for the EHCI to take advantage of the PCI functionality. A prior art USB controller comprising a DMA controller is known from US2002 178310.

Moreover, the host microprocessor in such devices typically has less processing power than the microprocessor in a PC.

It would therefore be advantageous to provide a host controller for use in embedded applications, in which the PCI functionality is not assumed, and in which the demands on the host microprocessor are reduced.

According to a first aspect of the present invention, there is provided an embedded host controller, for use in a USB system comprising a processor and an associated system memory, wherein the host controller comprises a DMA controller and a programmable register. The host controller is adapted such that, in order to retrieve data from the associated system memory, a starting address and block length are sent to the DMA controller; the DMA controller is adapted such that, on receipt of a starting address and block length sent from the host controller, it retrieves the indicated data from the associated system memory; and the programmable register is adapted to store a signal received from the processor indicating a maximum number of clock cycles for which the host controller can occupy the bus during a bus access.

This has the advantage that the embedded host controller can be used with different host microprocessors, without assuming that PCI functionality is available.

In a first preferred embodiment of the invention, wherein the host controller allows bus arbitration, the DMA controller is adapted to send a bus request to the processor, and to retrieve data from the associated system memory only when bus access has been granted.

In a second preferred embodiment of the invention, wherein the host controller does not allow bus arbitration, the DMA controller is adapted to send a signal to the processor while it is retrieving data from the associated system memory, thereby preventing the processor from simultaneously attempting to access the associated system memory.

According to a second aspect of the present invention, there is provided a USB host, including a host controller in accordance with the first aspect of the invention.

The invention will be described with reference to the accompanying drawings in which:
Fig. 1 is a block schematic diagram of a system including a first embedded host controller in accordance with the present invention.
Fig. 2 is a block schematic diagram of a system including a second embedded host controller in accordance with the present invention.

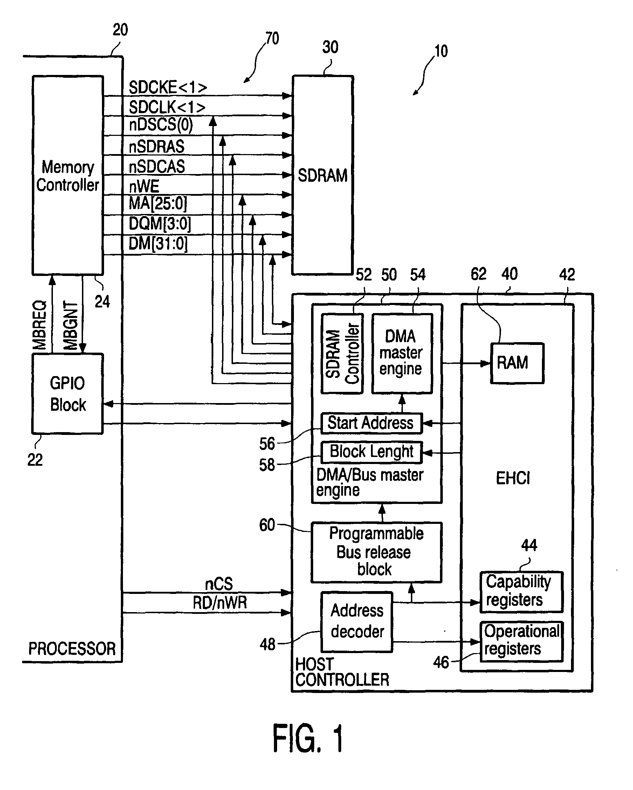

Fig. 1 is a block schematic diagram of a part of a USB host 10, in accordance with the present invention. The term USB host is used herein to mean a device which operates as a host in a system operating in accordance with, for example, the USB 2.0 specification. That is, the USB host can be connected by means of a USB bus to one or more USB devices, and the USB host controls the communication of data to and from the USB devices.

The present invention is applicable to all USB hosts, but it is particularly applicable to situations where the USB host is not a personal computer, and so it does not have a Peripheral Component Interconnect (PCI) bus, and may not have an especially powerful processor.

The USB host 10 has a host processor 20, a system memory 30, and a host controller 40.

In this preferred embodiment of the invention, the processor 20 is an Intel® PXA210 or PXA250 processor, and as such is well known to the person skilled in the art. Other processors having similar functionality can of course also be used. The processor 20 includes a General Purpose Input-Output (GPIO) block 22, and a memory controller 24. Other features and functions of the processor 20 will not be described further herein, except insofar as they are relevant to an understanding of the present invention.

The memory 30 is a SDRAM bank, which again, is well known to the person skilled in the art.

As is conventional, the host controller, or embedded EHCI host, 40 is adapted to retrieve data which is prepared by the processor 20 in a suitable format, and to transmit the data over the bus interface. In USB communications, there are two categories of data transfer, namely asynchronous transfer and periodic transfer. Control and bulk data are transmitted using asynchronous transfer, and ISO and interrupt data are transmitted using periodic transfer. The Enhanced Host Controller Interface (EHCI) uses a Queue Transaction Descriptor (qTD) data structure for asynchronous transfer, and an Isochronous Transaction Descriptor (iTD) data structure for periodic transfer.

The processor 20 prepares the data in the appropriate structure, and stores it in the system memory 30, and the host controller 40 must then retrieve the data from the system memory 30.

Fig. 1 shows in more detail the structure of the host controller 40. The host controller 40 includes an EHCI core 42, which is generally conventional, and includes capability registers 44 and operational registers 46, but will not be described further herein. The host controller 40 is connected to an address decoder 48, which is also generally conventional.

The internal capability registers 44 and operational registers 46 of the EHCI core 42 can be implemented as a direct input/output map, and a CS signal from the processor 20 can be used to select the embedded host controller.

In accordance with the invention, the host controller 40 includes a DMA/bus master engine 50, which is adapted for the case where, as here, the processor 20 allows for some form of bus arbitration.

The EHCI core 42 of the host controller 40 uses the same transfer descriptors which are used in the conventional EHCI host controller, which retrieves data by mastering a PCI bus, and so the additional effort required to produce the EHCI core software is reduced.

The DMA/bus master engine 50 includes a SDRAM controller 52 and a direct memory access (DMA) master engine 54, and can be programmed with a start address 56 and a block length 58 by the EHCI core 42.

The DMA/bus master engine 50 can also receive inputs from a programmable bus release block 60.

The host controller 40 further includes a RAM 62.

The host controller 40 can access the processor 20 through direct inputs or outputs to or from the GPIO block 22, and can access the embedded system memory bus 70.

When the host controller 40 is to retrieve the data from the system memory 30, the processor 20 must release the bus 70, allowing the host controller 40 to access the system memory 30.

Thus, when the host controller 40 initializes a transfer of data, a starting address and block length are sent from the core logic 42 to the DMA controller 54, which issues a bus request to the GPIO block 22. The GPIO block 22 sends a memory bus request (MBREQ) signal to the memory controller 24. When access is granted, a memory bus grant (MBGNT) signal is sent from the memory controller 24 to the GPIO block 22, which sends a corresponding signal to the host controller 40. All of the data, address and control signal lines of the bus 70 are then tri-stated, such that the host controller 40 can access the memory 30. Data can then be transferred from the system memory 30 to the host controller 40 without requiring further intervention from the processor 20.

Specifically, the DMA controller 54 bursts a block of data from the system memory 30 to the RAM 62, from which it can be transmitted over the USB bus interface.

The SDRAM controller 52 provides refresh capability during the time when the bus 70 is granted to the host controller 40. That is, if the burst cycle/length is longer than the refresh period of the SDRAM 30, the SDRAM controller 52 performs the refresh function. This means that the burst length need not be restricted to the refresh period. Without the SDRAM controller 52 to perform the refresh function, it would be necessary to transfer bus utilization back to the processor 20 for it to perform the refresh function, and then back to the host controller 40 to resume data transfer.

The programmable bus release block 60 can be programmed by the processor 20 with a number of clock cycles, and this sets the number of clock cycles for which the host controller 40 can occupy the bus 70 following a single memory bus access grant. Thus, the programmed number of clock cycles indicates a maximum duration of a bus access. Once this programmed number of clock cycles has expired, the host controller 40, by means of the DMA controller 54, performs a last dataword transfer, and then releases the bus 70 by means of a de-assertion bus request.

This prevents the host controller from occupying the bus 70 for so long that it prevents the processor 20 from performing critical tasks, and therefore allows a better balance of bus utilization between the processor 20 and host controller 40.

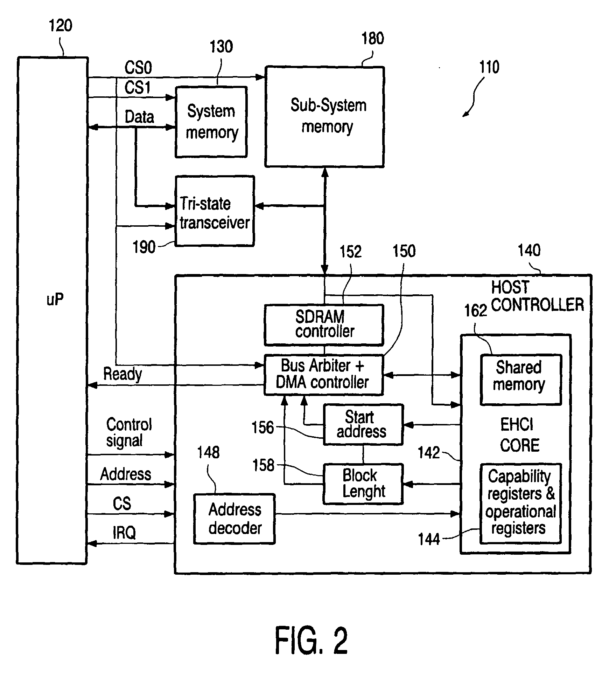

Thus, Fig. 1 shows an architecture which is applicable in the case where the processor 20 provides a form of bus arbitration, allowing release of its data bus. By contrast, Fig. 2 shows an architecture which is applicable in the case where the processor does not provide bus arbitration.

The USB host 110 has a host processor 120, a system memory 130, and a host controller 140.

In this case, the processor 120 is of a type which does not allow bus arbitration. Features and functions of the processor 120 will not be described further herein, except insofar as they are relevant to an understanding of the present invention.

The memory 130 is a SDRAM bank, which again, is well known to the person skilled in the art.

As is conventional, the host controller, or embedded EHCI host, 140 is adapted to retrieve data which is prepared by the processor 120 in a suitable format, and to transmit the data over the bus interface. In USB communications, there are two categories of data transfer, namely asynchronous transfer and periodic transfer. Control and bulk data are transmitted using asynchronous transfer, and ISO and interrupt data are transmitted using periodic transfer. The Enhanced Host Controller Interface (EHCI) uses a Queue Transaction Descriptor (qTD) data structure for asynchronous transfer, and an Isochronous Transaction Descriptor (iTD) data structure for periodic transfer.

In this case, the USB host 110 further includes a sub-system memory 180. The processor 120 prepares the data in the appropriate structure, and stores it in the sub-system memory 180, and the host controller 140 must then retrieve the data from the sub-system memory 180.

This means that the software stack running on the processor 120 does not need to be changed significantly from the case in which the data is stored in the system memory 130, except that the data is directed instead to the sub-system memory 180.

Fig. 2 shows in more detail the structure of the host controller 140. The host controller 140 includes an EHCI core 142, which is generally conventional, and includes capability registers and operational registers 144, but will not be described further herein. The host controller 140 is connected to an address decoder 148, which is also generally conventional.

In accordance with the invention, the host controller 140 includes a DMA controller 150, which in Fig. 2 is shown in a single block with a bus arbiter.

The DMA controller 150 is connected to a SDRAM controller 152, and can be programmed with a start address 156 and a block length 158 by the EHCI core 142.

The EHCI core 42 of the host controller 40 uses the same transfer descriptors which are used in the conventional EHCI host controller, which retrieves data by mastering a PCl bus, and so the additional effort required to produce the EHCI core software is reduced.

The EHCI core 142 further includes a shared memory 162 in the form of a RAM.

Thus, when the host controller 140 initializes a transfer of data, a starting address and block length are sent from the core logic 142 to the DMA controller 150, which can initiate a burst data transfer from the sub-system memory 180 to the RAM 162, from which it can be transmitted over the USB bus interface.

Because it is possible that the processor 120 will access the sub-system memory 180 at the same time as the host controller 140 is accessing the sub-system memory 180, it is necessary to be able to resolve any contention.

When the host controller 140 is accessing the sub-system memory 180, the bus arbiter in the DMA controller 150 sends a Ready signal to the processor 120 to delay any attempt by the processor 120 to access the sub-system memory 180 until the host controller access is complete.

Further, an external data bus tri-state transceiver 190 is provided, connected between the host controller 140 the sub-system memory 180, and the system memory 130. When the processor 120 is not accessing the sub-system memory 180, the data bus transceiver 190 is tri-stated, and the host controller 140 accessing the sub-system memory 180 will not affect the system memory 130. This can be controlled by a combination of chip select and control signals from the processor 120.

Thus, Fig. 2 shows an architecture which requires an additional large sub-system memory, by comparison with the architecture of Fig. 1, but can be used with a wider range of processors, since it does not require the processor to support bus arbitration.

## Claims

1. An embedded host controller, for use in a USB system comprising a processor and an associated system memory, the host controller comprising:
- a DMA controller;
- the host controller being adapted such that, in order to retrieve data from the associated system memory, a starting address and block length are sent to the DMA controller,
- the DMA controller being adapted such that, on receipt of a starting address and block length sent from the host controller, it retrieves the indicated data from the associated system memory, and
- **characterized by** further comprising a programmable register being adapted to store a signal received from the processor indicating a maximum number of clock cycles for which the host controller can occupy the bus during a bus access.

2. An embedded host controller as claimed in claim 1, wherein the DMA controller is adapted to send a bus request to the processor, and to retrieve data from the associated system memory only when bus access has been granted.

3. An embedded host controller as claimed in claim 1, wherein the host controller is adapted to release the bus on expiry of the maximum number of clock cycles.

4. An embedded host controller as claimed in claim 1, wherein the associated system memory is a SDRAM, and the host controller comprises a SDRAM controller, the SDRAM controller being adapted to perform a refresh function if retrieval of the indicated data from the associated system memory takes longer than a refresh period of the SDRAM.

5. An embedded host controller as claimed in claim 1, wherein the DMA controller is adapted to send a signal to the processor while it is retrieving data from the associated system memory, thereby preventing the processor from simultaneously attempting to access the associated system memory.

6. A USB host, comprising:
- a processor, wherein the processor is adapted to grant bus access;
- a system memory, to which the processor writes USB data; and
- a host controller according to claim 1.

7. A USB host as claimed in claim 6, wherein the host controller is adapted to release the bus on expiry of the maximum number of clock cycles.

8. A USB host as claimed in claim 6, wherein the associated system memory is a SDRAM, and the host controller comprises a SDRAM controller, the SDRAM controller being adapted to perform a refresh function if retrieval of the indicated data from the associated system memory takes longer than a refresh period of the SDRAM.

## Patentansprüche

1. Eingebetteter Host-Controller zur Benutzung in einem USB-System enthaltend einen Prozessor und einen zugehörigen Systemspeicher, wobei der Host-Controller umfasst:
- einen DMA-Controller;
- wobei der Host-Controller derart ausgebildet ist, dass, um Daten aus dem zugehörigen Systemspeicher abzurufen, eine Startadresse und eine Blocklänge zum DMA-Controller gesendet werden,
- der DMA-Controller derart ausgebildet ist, dass beim Erhalt einer Startadresse und Blocklänge, welche vom Host-Controller gesendet wurde, er die angezeigten Daten aus dem zugehörigen Systemspeicher abruft,
- **dadurch gekennzeichnet, dass** der Host-Controller weiterhin ein programmierbares Register enthält, welches ausgebildet ist, ein vom Prozessor her empfangenes Signal zu speichern, das eine maximale Anzahl von Taktzyklen anzeigt, in welchen der Host-Controller den Bus während eines Buszugriffes belegen kann.

2. Eingebetteter Host-Controller nach Anspruch 1, bei dem der DMA-Controller ausgebildet ist, eine Busanfrage an den Prozessor zu senden und Daten vom zugehörigen Systemspeicher abzurufen, nur wenn der Bus-Zugriff gewährt wurde.

3. Eingebetteter Host-Controller nach Anspruch 1, bei dem der Host-Controller ausgebildet ist, den Bus bei Ablauf der maximalen Anzahl von Taktzyklen freizugeben.

4. Eingebetteter Host-Controller nach Anspruch 1, bei dem der zugehörige Systemspeicher ein SDRAM ist, und der Host-Controller einen SDRAM-Controller enthält, wobei der SDRAM-Controller ausgebildet ist, eine Auffrischfunktion auszuführen, wenn das Abrufen der angezeigten Daten vom zugehörigen Systemspeicher länger dauert als eine Auffrischperiode des SDRAM.

5. Eingebetteter Host-Controller nach Anspruch 1, bei dem der DMA-Controller ausgebildet ist, ein Signal an den Prozessor zu senden, während er Daten vom zugehörigen Systemspeicher abruft und dabei den Prozessor davon abhält, gleichzeitig zu versuchen, auf den zugehörigen Systemspeicher zuzugreifen.

6. USB-Host, umfassend:
- einen Prozessor, wobei der Prozessor ausgebildet ist, Bus-Zugriff zu gewähren;
- einen Systemspeicher, in welchen der Prozessor USB-Daten schreibt; und
- einen Host-Controller gemäß Anspruch 1.

7. USB-Host nach Anspruch 6, bei dem der Host-Controller ausgebildet ist, den Bus nach Ablauf der maximalen Anzahl von Taktzyklen freizugeben.

8. USB-Host nach Anspruch 6, bei dem der zugehörige Systemspeicher ein SDRAM ist und der Host-Controller einen SDRAM-Controller enthält, wobei der SDRAM-Controller ausgebildet ist, eine Auffrischfunktion durchzuführen, wenn das Abrufen der angezeigten Daten vom zugehörigen Systemspeicher länger dauert als eine Auffrischperiode des SDRAM.

## Revendications

1. Régisseur hôte intégré, pour une utilisation dans un système USB comprenant un processeur et une mémoire du système associé, le régisseur hôte comprenant :
- un régisseur DMA,
- le régisseur hôte étant conçu de sorte que, afin de récupérer les données provenant de la mémoire du système associé, une adresse de départ et une longueur de bloc sont envoyées au régisseur DMA,
- le régisseur DMA étant conçu de sorte que, à réception d'une adresse de départ et d'une longueur de bloc envoyées à partir du régisseur hôte, il récupère les données prévues provenant de la mémoire du système associé, et
- un registre programmable étant conçu pour mémoriser un signal reçu en provenance du processeur indiquant un nombre maximum de cycles d'horloge pendant lesquels le régisseur hôte peut occuper le bus lors d'un accès à un bus.

2. Régisseur hôte intégré selon la revendication 1, dans lequel le régisseur DMA est conçu pour envoyer une requête de bus au processeur, et pour récupérer les données provenant de la mémoire du système associé uniquement lorsque l'accès à un bus a été accordé.

3. Régisseur hôte intégré selon la revendication 1, dans lequel le régisseur hôte est conçu pour libérer le bus à l'expiration du nombre maximum de cycles d'horloge.

4. Régisseur hôte intégré selon la revendication 1, dans lequel la mémoire du système associé est une mémoire SDRAM, et le régisseur hôte comprend un régisseur de mémoire SDRAM, le régisseur de mémoire SDRAM étant conçu pour réaliser une fonction de rafraîchissement si la récupération des données prévues provenant de la mémoire du système associé prend plus de temps qu'une durée de rafraîchissement de la mémoire SDRAM.

5. Régisseur hôte intégré selon la revendication 1, dans lequel le régisseur DMA est conçu pour envoyer un signal au processeur tout en récupérant des données provenant de la mémoire du système associé, empêchant ainsi le processeur de tenter d'accéder simultanément à la mémoire du système associé.

6. Hôte USB, comprenant :
- un processeur, dans lequel le processeur est conçu pour garantir un accès à un bus ;
- une mémoire de système, dans laquelle le processeur écrit des données USB ; et
- un régisseur hôte selon la revendication 1.

7. Hôte USB selon la revendication 6, dans lequel le régisseur hôte est conçu pour libérer le bus à expiration du nombre maximum de cycles d'horloge.

8. Hôte USB selon la revendication 6, dans lequel la mémoire du système associé est une mémoire SDRAM, et le régisseur hôte comprend un régisseur de mémoire SDRAM, le régisseur de mémoire SDRAM étant conçu pour réaliser une fonction de rafraîchissement si la récupération des données prévues provenant de la mémoire du système associé prend plus de temps qu'une durée de rafraîchissement de la mémoire SDRAM.
